(19) Europäisches Patentamt
European Patent Office
Office européen des brevets

(11) **EP 2 866 451 A1**

(12) **EUROPEAN PATENT APPLICATION**

(43) Date of publication:
**29.04.2015 Bulletin 2015/18**

(21) Application number: **14189727.2**

(22) Date of filing: **21.10.2014**

(51) Int Cl.:
*H04N 21/218* (2011.01)       *H04N 21/234* (2011.01)
*H04N 21/2365* (2011.01)      *H04N 21/242* (2011.01)
*H04N 21/643* (2011.01)       *H04L 29/06* (2006.01)
*H04N 7/15* (2006.01)          *H04N 13/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **23.10.2013 US 201314060815**

(71) Applicant: **Sony Corporation
Tokyo 108-0075 (JP)**

(72) Inventor: **Carroll, David
Santa Clara, CA California 95051 (US)**

(74) Representative: **Jackson, Jonathan Andrew
D Young & Co LLP
120 Holborn
London EC1N 2DY (GB)**

(54)     **Method and apparatus for IP video signal synchronization**

(57)     Certain aspects of an apparatus and method for Internet protocol (IP) video signal synchronization may include a server or switching center. The method for synchronized transmission of content may include receiving a plurality of content streams and a request to switch the transmission of content. The plurality of content streams may be received from a plurality of sources. The request to switch may switch the transmission of content from a first content stream to a second content stream of the received plurality of content streams. A time delay may be determined to be added to the transmission of content to compensate for a propagation delay of the received request and a processing delay to process the received request.

FIG. 1

EP 2 866 451 A1

**Description**

Various embodiments of the disclosure relate to internet protocol (IP) video transmission. More specifically, various embodiments of the disclosure relate to IP video signal synchronization.

Internet protocol (IP) TV systems use internet protocols for transmission of signals over a packet-switched network. An event may be captured by multiple cameras and/or microphones placed at different locations. Each camera and/or microphone may generate an IP signal corresponding to the event. The IP signal may include an audio, a video or an audio-visual signal, depending on the associated source. The IP signals may be transmitted to a switching center. The switching center may receive IP signals transmitted by multiple sources covering the event. An operating personnel at the switching center may select one or more feeds which may be communicated to the TV viewers. The operating personnel may select different IP feeds to provide an enhanced viewing experience for TV viewers.

Further limitations and disadvantages of conventional and traditional approaches will become apparent to one of skill in the art, through comparison of described systems with some aspects of the present disclosure, as set forth in the remainder of the present application and with reference to the drawings.

An apparatus and method are provided for internet protocol (IP) video signal synchronization substantially as shown in, and/or described in connection with, at least one of the figures, as set forth more completely in the claims.

These and other features and advantages of the present disclosure may be appreciated from a review of the following detailed description of the present disclosure, along with the accompanying figures in which like reference numerals refer to like parts throughout.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Embodiments of the invention will now be described with reference to the accompanying drawings, throughout which like parts are referred to by like references, and in which:

FIG. 1 is a block diagram illustrating a network environment in which the present disclosure may be implemented, in accordance with an embodiment of the disclosure.
FIG. 2 is a block diagram illustrating a network environment in which the present disclosure may be implemented, in accordance with another embodiment of the disclosure.
FIG. 3 is a block diagram illustrating a network environment in which the present disclosure may be implemented, in accordance with another embodiment of the disclosure.
FIG. 4 is a block diagram illustrating a switching center, in accordance with an embodiment of the disclosure.
FIG. 5 is a flow chart illustrating exemplary steps for signal synchronization, in accordance with an embodiment of the disclosure.

The following described implementations may be found in an apparatus and/or method for Internet protocol (IP) video signal synchronization.

Exemplary aspects of the disclosure may include a server for synchronized transmission of content. In an embodiment, a server coupled to a plurality of sources may be capable of receiving a plurality of content streams and a request to switch transmission of content. The plurality of content streams may be received from the plurality of sources. The received request may be a request for switching transmission of content from a first content stream to a second content stream of the received plurality of content streams. The server may be capable of determining a time delay to be added to the transmission of content to compensate for a propagation delay of the received request and a processing delay for processing the received request. The plurality of content streams may be one of an audio stream, a video stream, and/or an audio-visual stream. In an embodiment, an operating center may also generate control streams for equipment triggers and/or tallying lights at the sources.

In accordance with an embodiment, the server may be capable of determining a time delay to compensate for sources, operators, and switching equipment in different geophysical locations and/or using different signal paths (or network routes/ paths) which may have different transmission delays.

The server may be operable to buffer and delay all signals to allow a common source time synchronized (and delayed) set of streams to be available for synchronized switching to an output stream. The server may be further operable to provide additional buffering, delays, and compensation so that the operator or signal selector who may be present in yet another location, for example, in a cloud application can view all of the streams in a synchronized way and select the correct time instant to perform the switching command.

The propagation delay of the received request may be a time taken to receive the request from a remote entity. The server may be capable of switching the transmission of content from the first content stream to the second content stream of the received plurality of content streams based on the request received from a remote entity. The server may be capable of delaying the transmission of content to the remote entity based on the determined time delay. One or more frames of the received plurality of content streams may include a time stamp. The server may be capable of synchronizing the switching of the transmission of content based on the time stamp. One or more of the received plurality of content streams may be an Internet protocol (IP) video stream. Each of the received plurality of content streams may be one of a live content stream or a pre-recorded content stream. The content stream may be alternatively described as a feed in this application without limiting the scope of the disclosure.

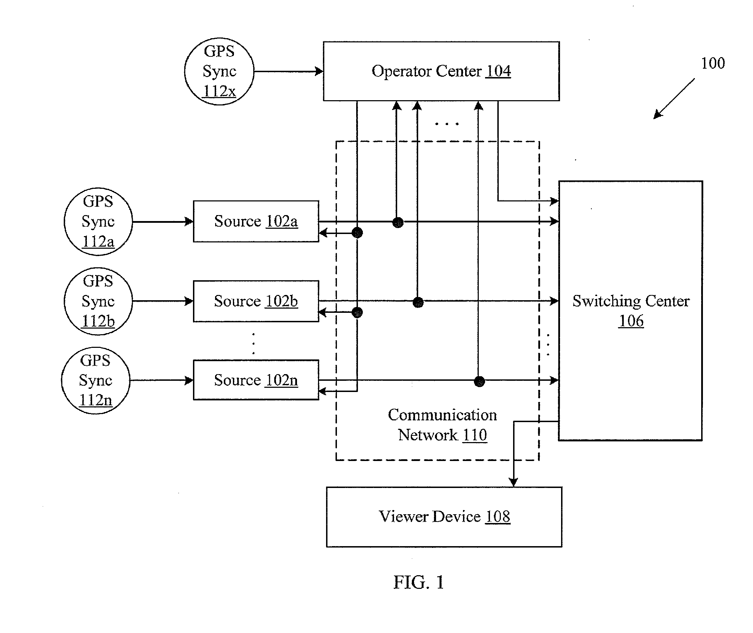

FIG. 1 is a block diagram illustrating a network environment in which the present disclosure may be implemented, in accordance with an embodiment of the disclosure. With reference to FIG. 1, there is shown a network environment 100 comprising a plurality of sources 102a, 102b, ... 102n (hereafter referred to collectively as sources 102), an operator center 104, a switching center 106, a viewer device 108, the communication network 110 and global positioning system (GPS) time synchronization unit 112a, 112b, ... 112n, 112x (hereafter referred to collectively as GPS time synchronization units 112). In an embodiment, the network environment 100 may be part of a cloud network. Notwithstanding, the disclosure may not be so limited, and other external devices may be utilized without limiting the scope of the disclosure.

The plurality of sources 102 may include suitable logic, circuitry, interfaces, and/or code that may be capable of generating and/or providing a content stream, such as an audio, a video, and/or an audio-visual stream. The sources 102 may be capable of communicating the generated content stream to the operator center 104 and/or the switching center 106, via the communication network 110. The sources 102 may include, but are not limited to, cameras, microphones and/or distributed memory locations. The generated content streams from each source (such as 102a) may be communicated as a separate feed to the operator center 104 and/or the switching center 106. In an embodiment, the sources 102 may be capable of receiving instructions and commands from the operator center 104. Notwithstanding, the disclosure may not be so limited, and other computing devices may be utilized without limiting the scope of the disclosure.

The operator center 104 may include suitable logic, circuitry, interfaces, and/or code that may be capable of encoding the feeds received from the sources 102. The encoded feeds may be presented to operating personnel at the operator center 104. The operator center 104 may be capable of receiving requests from the operating personnel. The operator center 104 may be capable of communicating the requests received from the operating personnel to the switching center 106, via the communication network 110.

The switching center 106 may include suitable logic, circuitry, interfaces, and/or code that may be capable of receiving the feeds communicated from the sources 102. The switching center 106 may be capable of selectively communicating one or more feeds based on the request received from the operator center 104. The selected one or more feeds may be communicated to the viewer device 108.

The viewer device 108 may include suitable logic, circuitry, interfaces, and/or code that may be capable of receiving one or more feeds communicated by the switching center 106. The viewer device 108 may be capable of encoding the feeds communicated by the switching center 106. The viewer device 108 may present the encoded feeds to a viewer.

The communication network 110 may include a medium through which the sources 102, the operator center 104, the switching center 106 and the viewer device 108 may communicate with each other. The communication network 110 may be enabled by one or more communication protocols which include, but are not limited to, Wireless Fidelity (Wi-Fi), Local Area Network (LAN), Transmission Control Protocol and Internet Protocol (TCP/IP), Ethernet, Cable network, Satellite network, and/or Digital Living Network Alliance (DLNA) home network. Various components in the network environment 100 may connect to the communication network 110, in accordance with various wired and wireless communication protocols, such as TCP/IP, User Datagram Protocol (UDP), IEEE 802.11 a, IEEE 802.11 b, IEEE 802.11 g, and/or IEEE 802.11n communication protocols.

In operation, each of the sources 102 may generate a feed corresponding to an event. Each feed may be an audio, a video and/or an audio-visual content, based on the capability of the sources 102. Each feed may be different based on some factor or parameter associated with the corresponding event. The factors or parameters may be an action and/or a location of a participant in the event, viewing angle of the sources 102, zoom, distances of the sources 102 from a participant in the event, and the like. The sources 102 may receive a GPS time signal from the GPS time synchronization units 112. The sources 102 may embed the received time signal in the generated feeds. The sources 102 may communicate the feeds embedded with the GPS time signal to an operator center 104 and/or a switching center 106, via the communication network 110.

The operator center 104 may be operable to receive the feeds communicated from the sources 102. Further, the operator center 104 may receive a GPS time signal from the GPS time synchronization unit 112x. The operator center 104 may process the received feeds to generate synchronized feeds, based on the GPS time signal embedded in the received feeds and the GPS time signal from the GPS time synchronization unit 112x. The synchronized feeds may be generated from the received feeds by introducing a corresponding delay to each of the received feeds. The delay may eliminate the difference in the network-introduced propagation delay to each of the received feeds. The synchronized feeds may be displayed to an operating personnel at the operator center 104. The operating personnel may choose one or more feeds that may be communicated to a viewer device 108. The choice of the operating personnel may be communicated to the switching center 106 by the operator center 104.

The switching center 106 may receive the feeds communicated from the sources 102. Further, the switching center 106 may receive the choice of the operating personnel from the operator center 104. The switching center 106 may communicate a feed to the viewer device 108 based on the received choice of the operating personnel. In an embodiment, the switching center 106 may communicate two or more feeds to the viewer device 108, based on the received choice of the operator center 104.

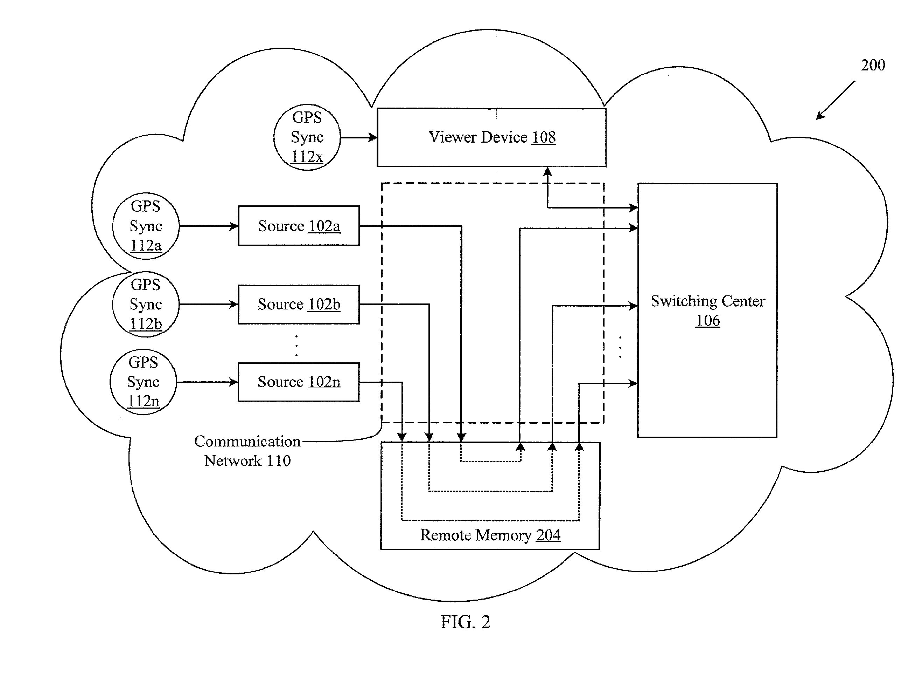

FIG. 2 is a block diagram illustrating a network environment in which the present disclosure may be implemented, in accordance with another embodiment of the disclosure. FIG. 2 is described in conjunction with elements from FIG. 1. With reference to FIG. 2, there is shown a network environment 200. The network environment 200 may comprise the sources 102, a remote memory 204, the switching center 106, the viewer device 108, the communication network 110 and GPS time synchronization units 112. In an embodiment, the network environment 100 may be part of a cloud network. Notwithstanding, the disclosure may not be so limited, and other external devices may be utilized without limiting the scope of the disclosure.

The sources 102 may include suitable logic, circuitry, interfaces, and/or code that may perform functions similar to the sources 102 described in FIG. 1.

The remote memory 204 may include suitable logic, circuitry, interfaces, and/or code that may be capable of storing the feeds received from the sources 102. The remote memory 204 may provide the stored feeds to the switching center 106 based on the request from the switching center 106. In an embodiment, the remote memory 204 may be a distributed memory. Notwithstanding, the disclosure may not be so limited, and the remote memory 204 may be implemented as other types of memory without limiting the scope of the disclosure.

In an embodiment, the viewer device 108 may be capable of receiving requests from the viewer. The viewer device 108 may be capable of communicating the requests received from the viewer to the switching center 106, via the communication network 110. The switching center 106 may be capable of receiving requests from the viewer device 108 and the feeds from the remote memory 204. The communication network 110 may include a medium through which the sources 102, the remote memory 204, the switching center 106 and the viewer device 108 may communicate with each other.

In operation, the sources 102 and the associated GPS time synchronization units 112 may function in a way similar to that explained in FIG. 1. The sources 102 may communicate the feeds embedded with the GPS time signal to the remote memory 204, via the communication network 110. The remote memory 204 may store the received feeds for later access. The remote memory 204 may process the received feeds to generate synchronized feeds, based on the GPS time signal embedded in the received feeds and the GPS time signal from the GPS time synchronization unit 112x. The synchronized feeds may be generated from the received feeds by introducing a delay to each of the received feeds to eliminate the difference in network introduced propagation delay to each of the received feeds. The synchronized feeds may be stored at the remote memory 204.

The viewer watching the viewer device 108 may send a request for a specific pre-stored feed. The viewer device 108 may receive and communicate the request from the viewer to the switching center 106. The switching center 106 may obtain the feed corresponding to the viewer's request from the remote memory 204, and communicate the requested feed to the viewer device 108. In an embodiment, the viewer may request for two or more feeds. The switching center 106 may communicate the requested two or more feeds to the viewer device 108, based on the received request of the viewer.

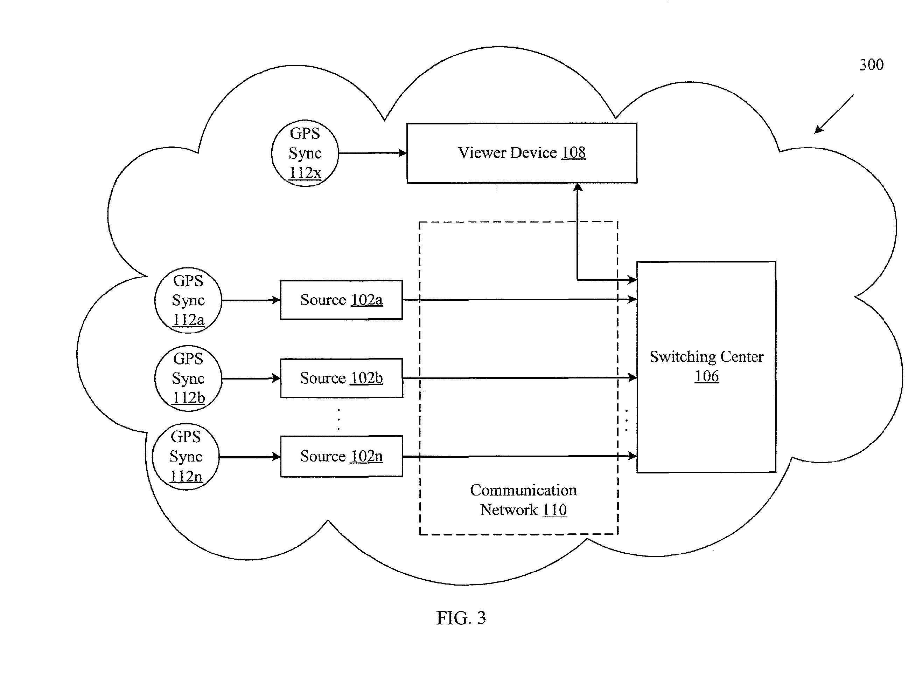

FIG.3 is a block diagram illustrating a network environment in which the present disclosure may be implemented, in accordance with another embodiment of the disclosure. FIG. 3 is described in conjunction with elements from FIG. 1. With reference to FIG. 3, there is shown a network environment 300. The network environment 300 may comprise the sources 102, the switching center 106, the viewer device 108, the communication network 110 and GPS time synchronization units (such as 112a, 112b, ... 112n, 112x). In an embodiment, the network environment 300 may be a part of a cloud network. Notwithstanding, the disclosure may not be so limited, and other external devices may be utilized without limiting the scope of the disclosure.

In an embodiment, the switching center 106 may be capable of receiving instructions from the viewer device 108 and the feeds from the sources 102. The communication network 110 may include a medium through which the sources 102, the switching center 106 and the viewer device 108 in the network environment 300 may communicate with each other.

In operation, the sources 102 and the associated GPS time synchronization units 112 may function in a way similar to that explained in FIG. 1. The sources 102 may communicate the feeds embedded with the GPS time signal to the switching center 106, via the communication network 110. The switching center 106 may store the received feeds.

The switching center 106 may communicate one or more received feeds to the viewer device 108. The viewer watching the viewer device 108 may send a request for a different feed. The viewer device 108 may receive and communicate the request received from the viewer to the switching center 106. The switching center 106 may communicate the feed corresponding to the viewer's request to the viewer device 108. In an embodiment, the viewer may request two or more feeds. The switching center 106 may communicate two or more feeds to the viewer device 108, based on the request received from the viewer device 108. In an embodiment, viewer device 108 may be capable of displaying more than one feed using the picture-in-picture (PIP) feature. The feeds displayed using the PIP feature may be communicated at a lower frame rate and/or pixel resolution. The viewer may select a feed displayed using the PIP. The switching center 106 may communicate the feed corresponding to the viewer's request, at a frame rate and/or pixel resolution higher than that may be used for PIP, to the viewer device 108.

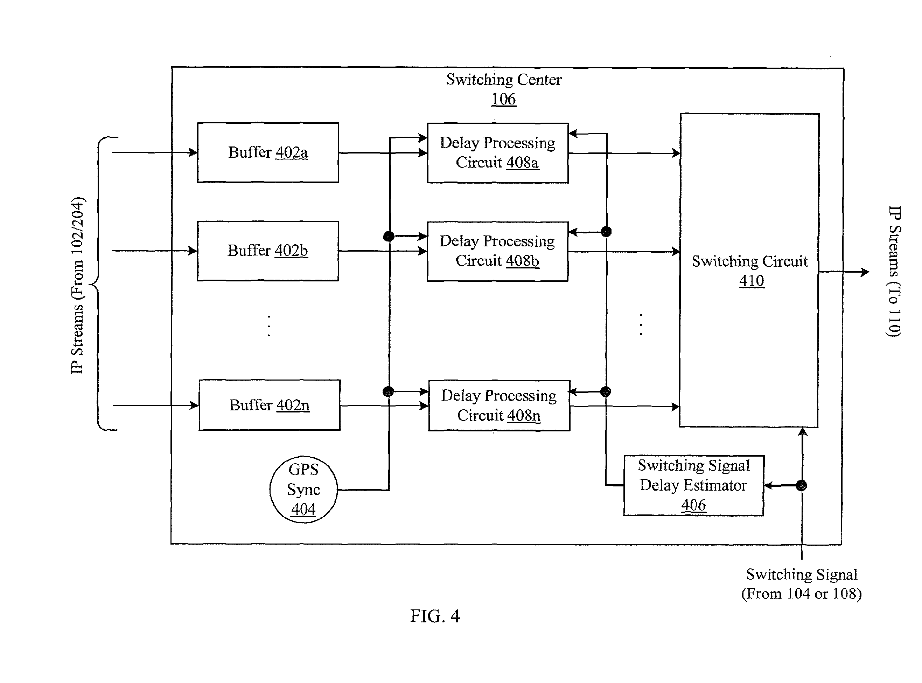

FIG. 4 is a block diagram illustrating a switching center, in accordance with an embodiment of the disclosure. FIG. 4 is explained in conjunction with elements from FIG.1, FIG. 2 and FIG. 3. With reference to FIG. 4, there is shown a switching center 106. The switching center 106 may include buffers 402a, 402b, ... 402n (hereafter referred to collectively as buffers 402), a GPS time synchronization unit 404, a switching signal delay estimator 406, delay processing circuits 408a, 408b, ... 408n (hereafter referred to collectively as delay processing circuits 408), and switching circuit 410.

The buffers 402 may include suitable logic, circuitry, interfaces, and/or code that may be capable of storing the feeds received from the sources 102. The buffers 402 may be implemented based on, but not limited to, a Random Access Memory (RAM), a Hard Disk Drive (HDD), and/or a storage server.

The GPS time synchronization unit 404 may include suitable logic, circuitry, interfaces, and/or code that may be capable of providing GPS time signals to the delay processing circuits 408.

The switching signal delay estimator 406 may include suitable logic, circuitry, interfaces, and/or code that may be capable of estimating propagation delay of a switching signal. The switching signal delay estimator 406 may receive the switching signal from the operator center 104. In an embodiment, the switching signal delay estimator 406 may receive a switching signal from the viewer device 108.

In an embodiment, the switching signal delay estimator 406 may be capable of determining the processing delay of the switching circuit 410. The determined processing delay may be communicated to the delay processing circuits 408. In an embodiment, the switching signal delay estimator 406 may be capable of generating a test input and a test switching signal to determine the processing delay of the switching circuit 410. In an embodiment, the switching signal delay estimator 406 may be capable of determining a processing delay by monitoring the input and output corresponding to the preceding switching signal received by the switching circuit 410. The switching signal delay estimator 406 may utilize the test signals for determining the processing delay if the variation between two consecutive processing delays is above a pre-determined threshold value.

The delay processing circuits 408 may include suitable logic, circuitry, interfaces, and/or code that may be capable of introducing a delay to the feeds communicated from the buffers 402 to the switching circuit 410. In an embodiment, the delay processing circuit 408 may receive three inputs - first from the buffers 402, the second from the GPS time synchronization unit 404 and the third from the switching signal delay estimator 406. The delay processing circuits 408 may communicate delayed feeds to the switching circuit 410.

In operation, the buffers 402 may receive the feeds from the sources 102. The buffers 402 may communicate the feeds received from the sources 102 to the switching circuit 410, via the corresponding delay processing circuits 408. The delay processing circuits 408 may introduce a delay based on input from the GPS time synchronization unit 404 and the switching signal delay estimator 406.

The delay processing circuits 408 may be capable of comparing the received GPS time signals from the GPS time synchronization unit 404 with the GPS time signal embedded in the received feeds. The delay processing circuits 408 may be capable of estimating the network introduced propagation delay to each of the received feeds. Further, the delay processing circuits 408 may be capable of introducing a corresponding delay to each of the received feeds, to eliminate the difference in network introduced propagation delay to each of the received feeds.

Further, the delay processing circuits 408 may be capable of receiving an input from the switching signal delay estimator 406. The switching signal delay estimator 406 may be capable of receiving the switching signal from the operator center 104. Further, the switching signal delay estimator 406 may be capable of estimating the propagation delay for the switching signal from the operator center 104 to the switching center 106. The estimated propagation delay corresponding to the switching signal may be communicated to the delay processing circuits 408. The delay processing circuits 408 may be capable of introducing a delay equivalent to the propagation delay of the switching signal to the received feeds.

The switching circuit 410 may be capable of receiving the switching signal from the operator center 104. The switching circuit 410 may execute the received switching signal after a processing delay. The delay processing circuits 408 may be capable of introducing a delay equivalent to the latency of the switching circuit 410, to execute the switching signal from the operator center 104.

The delay processing circuits 408 may be capable of introducing a delay to each feed to compensate for inconsistency in transmission due to network latency, propagation delay and latency of switching circuit 410. Thus, delay introduced by the delay processing circuits 408 may be expressed as:

$$t_d = t_{nl} + t_{pd} + t_{sd} \quad \ldots\ldots\ldots\ldots \quad (1)$$

where,

$t_d$ is the total delay introduced in a received feed by the delay processing circuits 408;

$t_{nl}$ is the delay introduced in a received feed that may compensate for the difference in the network latencies between the sources 102 and switching center 106;

$t_{pd}$ is the delay introduced in a received feed that may correspond to the propagation delay of the switching signal from the operator center 104; and

$t_{sd}$ is the delay introduced in a received feed that may correspond to the latency of the switching circuit 410.

In an embodiment, the sources 102, the operator center 104, the switching center 106 and the viewer device 108 may be geographically located at different time zones. In such a situation, the delay processing circuits 408 may be capable of compensating for a time shift due to the different time zones. After compensating for the difference in time shift, the received feeds may have a mutual lag or lead due to a difference in network latency experienced by each of the received feeds. The delay processing circuits 408 may compensate for the difference in network latency as discussed previously in the disclosure.

As a consequence, the viewer at the viewer device 108 may watch a feed delayed by time $t_d$. The operating personnel at the operator center 104 may watch a feed after compensating for difference in network latencies experienced by each feed. The operating personnel may view multiple feeds at the same time. Based on the request from the operating personnel, the operator center 104 may generate a switching signal to request the switching center 106 to communicate a feed (say "feed one") to the viewer device 108. The operator center 104, based on another request from the operating personnel, may request the switching center 106 to communicate another feed (say "feed two"). The operator center 104 may communicate the request as a switching signal to the switching circuit 410 at the switching center 106. The switching circuit 410 may receive a switching signal from the operator center 104 after a time period equal to propagation delay. The GPS time stamp associated with the "feed one" at the time instant when the operator center 104 generates the request to switch feeds may be "time stamp one". The delay processing circuits 408 may adjust the delay introduced to the feeds. As a result, the GPS time stamp associated with the terminal frame of the "feed one" transmitted to the viewer device 108 may be "time stamp one". Further, the GPS time stamp associated with the initial frame of the "feed two" transmitted to the viewer device 108 may be "time stamp two". The "time stamp one" and the "time stamp two" may be successive time stamps after removing time shift if any. With this feature, the viewer at the viewer device 108 may have the viewing experience desired by the operating personnel at the operator center 104.

For example, consider a soccer match being covered using multiple cameras. A first camera may generate a feed corresponding to one of the two goal posts; say the first goal post (as in, the first feed). Assume that an opposition player moves towards the first goal post with the ball. A second camera may generate a feed corresponding to the player (as in, the second feed). The player may take a long shot to the first goal post and succeed in scoring a goal. The viewer watching the viewer device 108 may have an enhanced viewing experience, if the viewer device 108 receives the first feed when the long shot may be taken by the player and the second feed when the ball reaches the goal post. To achieve this, the operating personnel may change the transmission of first feed to the second feed. The cumulative delay, due to network delay, propagation delay and execution delay at the switching circuit 410, may fail the synchronous transition from first feed to second feed. A synchronous transition implies that the GPS time stamp associated with an initial frame of the second feed may be successive to the GPS time stamp associated with the frame of the first feed at the time instant when the operating personnel generates a switching signal. The synchronous transition may be achieved by adding the delay processing circuit 408. The viewer at the viewer device 108 may have an enhanced viewing experience as desired by the operating personnel at the operator center 104. The viewer device 108 may receive the first feed when the player takes the long shot and second feed by the time the ball reaches the first goal post.

In an embodiment (with reference to FIG. 1), the sources 102 may be distributed at remote storage locations. The operator center 104 and the switching center 106 may receive pre-stored feeds. Each pre-stored feeds may have different network latencies based on the location of the corresponding remote storage. Notwithstanding, whether the received feeds may be live transmission feeds from the sources 102 or pre-stored feeds from distributed remote storage locations, the operator center 104 and the switching center 106 may function as described above.

In an embodiment (with reference to FIG. 2 and FIG 4), the buffers 402 may receive the feeds from the remote memory 204. The remote memory 204 may be capable of storing feeds generated by the sources 102. The viewer device 108 may receive a request for a pre-stored feed from the viewer. The viewer device 108 may be capable of communicating the request to the switching circuit 410. The switching circuit 410 may access the pre-stored feed corresponding to the request from the viewer device 108. The remote memory 204 may be capable of communicating the pre-stored feeds with embedded GPS time signals to the switching center 106.

The delay processing circuits 408 may function in a similar manner as explained previously in the disclosure. The delay processing circuits 408 may be capable of introducing a delay to each feed to compensate for inconsistency in transmission due to network latency, propagation delay and latency of the switching circuit 410. Thus the delay introduced by the delay processing circuits 408 may be expressed as:

$$t_d = t_{nl} + t_{pd} + t_{sd} \qquad …………… \qquad (2)$$

where,

$t_d$ is the total delay introduced in a received feed by the delay processing circuits 408;
$t_{nl}$ is the delay introduced in a received feed that may compensate for the difference in the network latencies between the remote memory 204 and the switching center 106;
$t_{pd}$ is the delay introduced in a received feed that may correspond to the propagation delay of the switching signal from the viewer device 108; and
$t_{sd}$ is the delay introduced in a received feed that may correspond to the latency of the switching circuit 410.

In an embodiment (with reference to FIG. 3 and FIG 4), the sources 102 may be capable of generating live transmission feeds corresponding to an event. The switching center 106 may receive live transmission feeds from the sources 102. The buffers 402 may store the received live transmission feeds. The switching circuit 410 may receive a switching signal from the viewer device 108. The switching signal may inform the feed requested by the viewer to the switching circuit 410 at the switching center 106. The switching circuit 410 may switch to the transmission of a feed corresponding to the received switching signal from the viewer device 108.

Each live transmission feed may have different network latencies based on the location of the corresponding sources 102. The switching signal may have a propagation delay, which may correspond to the time required to propagate from the viewer device 108 to the switching center 106. Further, the switching circuit 410 may take time to process the switching signal. The delay processing circuits 408 may introduce a delay to the received live transmission feeds. The introduced delay may be greater than or equal to the total delay due to network latency, propagation delay of the switching signal and the execution time required by the switching circuit 410. The minimum delay introduced by the delays in a corresponding feed may be expressed as:

$$t_d = t_{nl} + t_{pd} + t_{sd} \qquad …………… \qquad (3)$$

where,

$t_d$ is the total delay introduced in a received feed by the delay processing circuits 408;
$t_{nl}$ is the delay introduced in a received feed that may compensate for the difference in the network latencies between the sources 102 and switching center 106;
$t_{pd}$ is the delay introduced in a received feed that may correspond to the propagation delay of the switching signal from the viewer device 108; and
$t_{sd}$ is the delay introduced in a received feed that may correspond to the latency of the switching circuit 410.

In an embodiment, the delay processing circuits 408 may include suitable logic, circuitry, interfaces, and/or code that may be capable of selecting frames from the buffers 402 based on the associated timestamp. Further, the delay processing circuits 408 may be capable of generating clock signals. Based on the feed selected by the received switching signal, a corresponding delay processing circuit (such as a delay processing circuit 408b) may modify its attributes.

The delay processing circuit (such as delay processing circuit 408b, as determined by received switching signal) may be capable of determining a time stamp based on the input from GPS time synchronization unit 404 and the switching signal delay estimator 406. This time stamp may correspond to the frame from which the requested feed has to be communicated to the viewer device 108. Further, the delay processing circuit (such as delay processing circuit 408b) may determine a delay time based on the input from GPS time synchronization unit 404 and switching signal delay estimator 406. This delay time may correspond to compensation for the difference in network latency of requested feed with respect to previous feed, the propagation delay of the switching signal and processing delay of the switching circuit 410. The delay processing circuit (such as delay processing circuit 408b) may be capable of starting communication of the requested feed from a frame corresponding to the determined time stamp, from the associated buffer (such as a buffer 402b). Further, the determined delay time may be used to determine duration for which the generation of clock may be put on hold. The delay processing circuits (such as delay processing circuit 408b) may begin generation of a clock after the determined delay time. As a result, the delay processing circuit (such as delay processing circuit 408b) may begin communicating the feed from an associated buffer (such as buffer 402b) to the switching circuit 410 after a delay equal to the determined time period and from a frame determined by the switching signal.

Notwithstanding, whether the received feeds may be live transmission feeds from the sources 102 or pre-stored feeds from distributed remote storage locations, the viewer device 108 and the switching center 106 may function as described above.

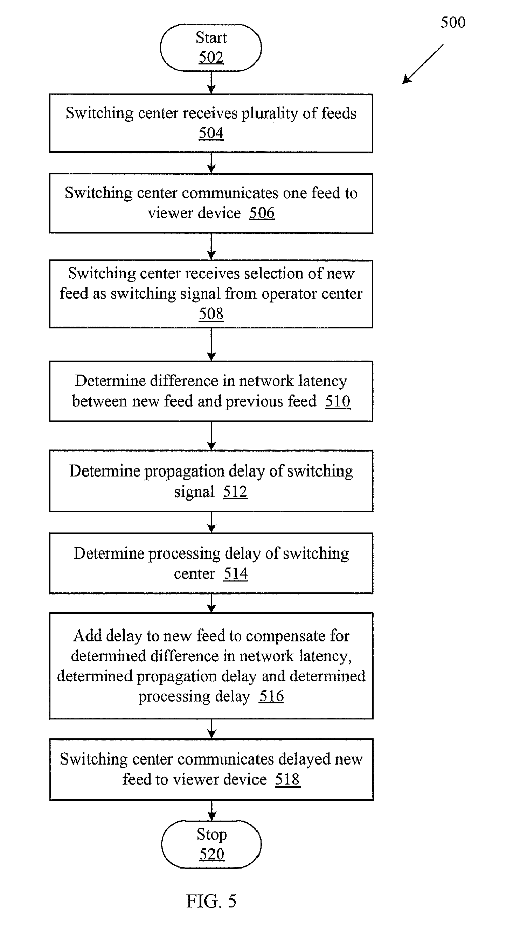

FIG. 5 is a flow chart illustrating exemplary steps for signal synchronization, in accordance with an embodiment of the disclosure. In reference to FIG. 5, there is shown a method 500. The method 500 is described in conjunction with the elements of FIG. 1, FIG. 2, FIG. 3, and FIG. 4.

Exemplary steps begin at step 502. At step 504, the switching center 106 may receive a plurality of feeds communicated from the sources 102. The feeds may include a time stamp associated with the frames. At step 506, the switching center 106 may communicate a feed to the viewer device 108. An operating personnel at the operator center 104 may select a new feed for the viewer device 10 8. At step 508, the switching center 106 may receive the selection of the operating personnel as a switching signal. At step 510, the switching center 106 may determine the difference in the network latency between the new feed and the previous feed. At step 512, the switching center 106 may determine the propagation delay of the switching signal received from the operator center 104. At step 514, the processing delay of the switching center 106 may be determined. At step 516, the switching center 106 may add a delay to the new feed to compensate for the determined difference in network latency, the determined propagation delay and the determined processing delay. At step 518, the switching center 106 may communicate the delayed new feed to the viewer device 108. The method 500 ends at step 520.

In accordance with another embodiment of the disclosure, an apparatus and method for IP video signal synchronization may include a switching center 106. In accordance with an embodiment of the disclosure, an apparatus for synchronized transmission of content may include a server or switching center 106 (FIG.1, FIG. 2, FIG. 3 and FIG. 4) that may be communicably coupled to one or more remote entities (such as 102, 104, 108, in FIG. 1, FIG. 2 and FIG. 3). The switching center 106 may include one or more processors and/or circuits that may be operable to receive a plurality of content streams and a request to switch the transmission of content. The plurality of content streams may be received from a plurality of sources 102. The received request may be a request for switching the transmission of content from a first content stream to a second content stream of the received plurality of content streams.

The one or more processors and/or circuits may be operable to determine a time delay to be added to the transmission of content to compensate for a propagation delay and a processing delay. The propagation delay may comprise a delay associated with receiving the request from a remote entity (104 or 108). The processing delay may comprise a time required to process the received request. The one or more processors and/or circuits may be operable to switch the transmission of content from the first content stream to the second content stream based on the received request from the remote entity (104 or 108). The one or more processors and/or circuits may be operable to delay the transmission of content to a remote entity 108, based on the determined time delay. The one or more processors and/or circuits may be operable to synchronize the switching of the transmission of content based on the time stamp associated with the received content streams. One or more of the received plurality of content streams may be an Internet protocol (IP) video stream.

Other embodiments of the disclosure may provide a non-transitory computer readable medium and/or storage medium, and/or a non-transitory machine readable medium and/or storage medium. Having applicable mediums stored thereon, a machine code and/or a computer program having at least one code section for synchronized transmission of content, executable by a machine and/or a computer, may thereby cause the machine and/or computer to perform the steps comprising receiving a plurality of content streams and a request to switch the transmission of content. The plurality of content streams may be received from a plurality of sources. The received request may be a request to switch the transmission of content from a first content stream to a second content stream of the received plurality of content streams. The code section may include code for determining a time delay to be added to the transmission of content to compensate for a propagation delay of the received request and a processing delay to process the received request.

The present disclosure may be realized in hardware, or a combination of hardware and software. The present disclosure may be realized in a centralized fashion, in at least one computer system, or in a distributed fashion, where different elements may be spread across several interconnected computer systems. A computer system or other apparatus adapted for carrying out the methods described herein may be suited. A combination of hardware and software may be a general-purpose computer system with a computer program that, when being loaded and executed, may control the computer system such that it carries out the methods described herein. The present disclosure may be realized in hardware that comprises a portion of an integrated circuit that also performs other functions.

The present disclosure may also be embedded in a computer program product, which comprises all the features enabling the implementation of the methods described herein, and which when loaded in a computer system is able to carry out these methods. Computer program, in the present context, means any expression, in any language, code or notation, of a set of instructions intended to cause a system having an information processing capability to perform a particular function either directly, or after either or both of the following: a) conversion to another language, code or notation; b) reproduction in a different material form.

While the present disclosure has been described with reference to certain embodiments, it will be understood by those skilled in the art that various changes may be made and equivalents may be substituted without departing from the scope of the present disclosure. In addition, many modifications may be made to adapt a particular situation or material to the teachings of the present disclosure without departing from its scope. Therefore, it is intended that the present disclosure not be limited to the particular embodiment disclosed, but that the present disclosure will include all embodiments falling within the scope of the appended claims.

Various respective aspects and features of the invention are defined in the appended claims. Combinations of features from the dependent claims may be combined with features of the independent claims as appropriate and not merely as explicitly set out in the claims.

**Claims**

1. A method for transmission of content, said method comprising:

   in a server:

      receiving a plurality of content streams from a plurality of sources;
      receiving a request to switch said transmission of said content from a first of said received plurality of content streams to a second of said received plurality of content streams; and
      determining a time delay to be added to said transmission of said content to compensate for a propagation delay of said received request and a processing delay for processing said received request.

2. The method of claim 1, wherein each of said received plurality of content streams is one of: an audio stream, a video stream, and/or an audio-visual stream.

3. The method of claim 1, wherein said propagation delay of said received request comprises a delay associated with receiving said request from a remote entity.

4. The method of claim 1, comprising switching said transmission of said content from said first of said received plurality of content streams to said second of said received plurality of content streams based on said received request from a remote entity.

5. The method of claim 4, comprising delaying said transmission of said content to said remote entity based on said determined time delay.

6. The method of claim 4, wherein said plurality of sources comprises one or more of: a camera, a microphone and/or distributed memory locations.

7. The method of claim 6, wherein one or more frames of said received plurality of content streams comprises a time stamp.

8. The method of claim 7, comprising synchronizing said switching of said transmission of said content based on said time stamp.

9. The method of claim 1, wherein one or more of said received plurality of content streams is an Internet protocol (IP) video stream.

10. The method of claim 1, wherein each of said received plurality of content streams is one of: a live content stream or a pre-recorded content stream.

11. An apparatus for transmitting content, said apparatus comprising:

one or more processors and/or circuits operable to:

receive a plurality of content streams from a plurality of sources;
receive a request to switch said transmission of said content from a first of said received plurality of content streams to a second of said received plurality of content streams; and
determine a time delay to be added to said transmission of said content to compensate for a propagation delay of said received request and a processing delay for processing said received request.

12. The apparatus of claim 11, wherein said one or more processors and/or circuits are operable to switch said transmission of said content from said first of said received plurality of content streams to said second of said received plurality of content streams based on said received request from a remote entity.

13. The apparatus of claim 12, wherein said one or more processors and/or circuits are operable to delay said transmission of said content to said remote entity based on said determined time delay.

14. The apparatus of claim 13, wherein said one or more processors and/or circuits are operable to synchronize said switching of said transmission of said content based on an associated time stamp.

15. A computer program product comprising computer readable instructions which, when loaded onto a computer, configure the computer to perform a method according to claim 1.

FIG. 1

FIG. 2

EP 2 866 451 A1

FIG. 3

FIG. 4

500

Start
502

↓

Switching center receives plurality of feeds
504

↓

Switching center communicates one feed to viewer device 506

↓

Switching center receives selection of new feed as switching signal from operator center
508

↓

Determine difference in network latency between new feed and previous feed 510

↓

Determine propagation delay of switching signal 512

↓

Determine processing delay of switching center 514

↓

Add delay to new feed to compensate for determined difference in network latency, determined propagation delay and determined processing delay 516

↓

Switching center communicates delayed new feed to viewer device 518

↓

Stop
520

FIG. 5

**EP 2 866 451 A1**

Europäisches
Patentamt
European
Patent Office
Office européen
des brevets

# EUROPEAN SEARCH REPORT

Application Number

EP 14 18 9727

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2011/280540 A1 (WOODMAN NICHOLAS D [US]) 17 November 2011 (2011-11-17)<br>* figures 1,6 *<br>* paragraph [0022] - paragraph [0023] *<br>* paragraph [0028] *<br>* paragraph [0031] *<br>* paragraph [0037] *<br>* paragraph [0040] - paragraph [0041] *<br>* paragraph [0046] *<br>* paragraph [0049] *<br>* paragraph [0050] *<br>* paragraph [0056] *<br>* paragraph [0058] - paragraph [0060] *<br>* paragraph [0065] *<br>* paragraph [0067] *<br>----- | 1-15 | INV.<br>H04N21/218<br>H04N21/234<br>H04N21/2365<br>H04N21/242<br>H04N21/643<br>H04L29/06<br>H04N7/15<br>H04N13/00 |
| Y | WO 2012/057545 A2 (SAMSUNG ELECTRONICS CO LTD [KR]) 3 May 2012 (2012-05-03)<br>* paragraph [0001] *<br>* paragraph [0005] *<br>* paragraph [0014] *<br>* paragraph [0019] - paragraph [0020] *<br>* paragraph [0060] - paragraph [0061] *<br>* paragraph [0063] *<br>* paragraph [0068] *<br>* paragraph [0081] - paragraph [0092] *<br>* paragraph [0105] - paragraph [0113] *<br>* paragraph [0128] *<br>----- | 1-15 | |
| A | WO 2013/133863 A1 (THOMSON LICENSING [FR]; REDMANN WILLIAM GIBBENS [US])<br>12 September 2013 (2013-09-12)<br>* page 6, line 11 - line 13 *<br>* page 8 *<br>* page 12, line 12 - page 15, line 22 *<br>* page 16, line 9 - line 11 *<br>* page 17, line 3 - line 12 *<br>----- | 1-15 | TECHNICAL FIELDS SEARCHED (IPC)<br><br>H04N<br>H04L |

-/--

The present search report has been drawn up for all claims

| Place of search | Date of completion of the search | Examiner |
|---|---|---|
| The Hague | 12 February 2015 | Boubal, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 14 18 9727

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 02/078348 A2 (POPWIRE COM [SE]; NORSTROM ANDERS [SE]; JOHANSSON KAY [SE]; KARLSSON K) 3 October 2002 (2002-10-03)<br>* figures 2,8 *<br>* page 5, line 17 - line 30 *<br>* page 6, line 22 - line 24 *<br>* page 10, line 15 - line 16 *<br>* page 10, line 27 - line 28 *<br>* page 11, line 2 - line 3 *<br>* page 11, line 26 - line 30 *<br>* page 14, line 17 - line 19 * | 1-15 | |
| A | US 2010/157020 A1 (CHOI YOON-SEOK [KR] ET AL) 24 June 2010 (2010-06-24)<br>* paragraph [0042] *<br>* paragraph [0048] *<br>* paragraph [0056] *<br>* paragraph [0061] - paragraph [0063] * | 1-15 | |
| A | US 6 802 019 B1 (LAUDER DOUG [CA]) 5 October 2004 (2004-10-05)<br>* column 2, line 29 - line 36 *<br>* column 3, paragraph 16 - column 5, paragraph 46 *<br>* paragraph [0056] *<br>* paragraph [0061] - paragraph [0063] * | 1-15 | TECHNICAL FIELDS SEARCHED (IPC) |
| A | EP 2 403 236 A1 (STOCKHOLMS UNI HOLDING AB [SE]) 4 January 2012 (2012-01-04)<br>* abstract *<br>* paragraph [0019] *<br>* paragraph [0023] - paragraph [0028] *<br>* paragraph [0046] * | 1-15 | |

The present search report has been drawn up for all claims

| Place of search | Date of completion of the search | Examiner |
|---|---|---|
| The Hague | 12 February 2015 | Boubal, Olivier |

EPO FORM 1503 03.82 (P04C01)

**ANNEX TO THE EUROPEAN SEARCH REPORT
ON EUROPEAN PATENT APPLICATION NO.**                    EP 14 18 9727

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2015

| Patent document cited in search report | | Publication date | Patent family member(s) | | Publication date |
|---|---|---|---|---|---|
| US 2011280540 | A1 | 17-11-2011 | EP | 2569952 A1 | 20-03-2013 |
| | | | US | 2011280540 A1 | 17-11-2011 |
| | | | US | 2014064701 A1 | 06-03-2014 |
| | | | WO | 2011143342 A1 | 17-11-2011 |
| WO 2012057545 | A2 | 03-05-2012 | CN | 103181145 A | 26-06-2013 |
| | | | EP | 2633671 A2 | 04-09-2013 |
| | | | KR | 20130125758 A | 19-11-2013 |
| | | | US | 2012133827 A1 | 31-05-2012 |
| | | | WO | 2012057545 A2 | 03-05-2012 |
| WO 2013133863 | A1 | 12-09-2013 | CN | 104160708 A | 19-11-2014 |
| | | | EP | 2823642 A1 | 14-01-2015 |
| | | | US | 2015019670 A1 | 15-01-2015 |
| | | | WO | 2013133863 A1 | 12-09-2013 |
| WO 02078348 | A2 | 03-10-2002 | AU | 2002314450 A1 | 08-10-2002 |
| | | | EP | 1386492 A2 | 04-02-2004 |
| | | | US | 2002170067 A1 | 14-11-2002 |
| | | | WO | 02078348 A2 | 03-10-2002 |
| US 2010157020 | A1 | 24-06-2010 | KR | 20100073079 A | 01-07-2010 |
| | | | US | 2010157020 A1 | 24-06-2010 |
| US 6802019 | B1 | 05-10-2004 | US | 6802019 B1 | 05-10-2004 |
| | | | US | 2005034005 A1 | 10-02-2005 |
| EP 2403236 | A1 | 04-01-2012 | EP | 2403236 A1 | 04-01-2012 |
| | | | US | 2013222601 A1 | 29-08-2013 |
| | | | WO | 2012002896 A1 | 05-01-2012 |

EPO FORM P0459

For more details about this annex : see Official Journal of the European Patent Office, No. 12/82